# EUROPEAN PATENT SPECIFICATION

(11) **EP 1 766 708 B1**
(45) Date of publication and mention of the grant of the patent: **14.12.2011**
(21) Application number: 04756602.1
(22) Date of filing: 02.07.2004
(51) Int. Cl.: H01M 8/02, H01M 8/24, H01M 8/12

(54) **SOLID OXIDE FUEL CELL FRAMES AND METHOD OF MANUFACTURE**
FESTOXID-BRENNSTOFFZELLENRAHMEN UND HERSTELLUNGSVERFAHREN
CADRES POUR PILES A COMBUSTIBLE SOFC ET PROCEDE DE FABRICATION

(43) Date of publication of application: 28.03.2007
(73) Proprietor: BATTELLE MEMORIAL INSTITUTE, Richland, WA 99352 (US)
(72) Inventor: WEIL, K., Scott, Richland, WA 99352 (US); PAXTON, Dean, Michael, Kennewick, WA 99338 (US); MEINHARDT, Kerry, D., Kennewick, WA 99336 (US)
(74) Representative: Brown, Fraser Gregory James
(86) International application number: PCT/US2004/021385
(87) International publication number: WO 2006/014155

(56) References cited:
- EP-A- 0 459 940
- EP-A- 1 401 040
- WO-A-02/089243
- US-A1- 2003 096 147

## Description

### Background Of The Invention

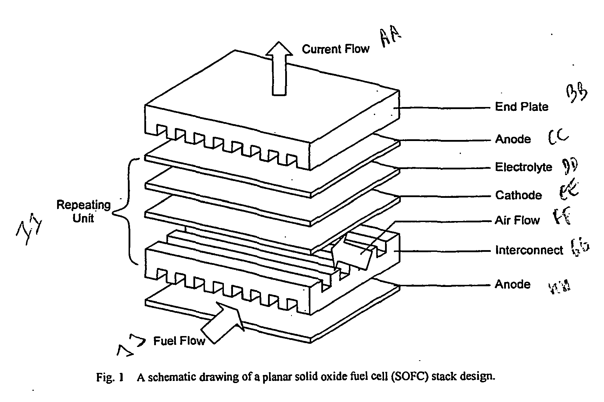

Over the past decade in Europe, Japan, and North America, there has been mounting public and political pressure on automakers and electric utilities to improve fuel utilization for power generation, both in order to reduce the reliance of the constituent countries on foreign oil supply and to reduce pollution emissions. These factors, coupled with the tremendous growth in the worldwide demand for power, have led to an increasing interest in developing alternative methods of power generation, such as fuel cells, for a variety of stationary and mobile applications, including off-the-power-grid residential power, auxiliary semi-truck power, electric automobiles, and portable power generation for military applications. The key feature of the fuel cell is that it directly converts the chemical energy of the incoming fuel into electrical energy via an electrochemical reaction. Because there is no intermediate thermal conversion step, and therefore no attendant Camot cycle limitation, fuel cells can provide a highly efficient means of energy conversion. Furthermore, fuel cells of the high temperature variety, known as solid oxide fuel cells (SOFCs), offer greater flexibility than other cells in the type of fuel that they employ, with the potential to directly utilize a wide variety of commercial fuels, such as natural gas, methanol, coal gas and liquid hydrocarbons, all at a significant reduction in pollution emissions relative to the present-day combustion power plants.
As shown in Figure 1, a solid oxide fuel cell consists of a solid-state electrolyte material sandwiched between a cathode (+) and an anode (-) to form a tri-layer structure commonly referred to as a PEN (positive-electrolyte-negative). Gaseous fuel and oxidant streams enter the cell separately. The fuel feeds into the anode where it is oxidized and gives up electrons to an external circuit. Electrons returning from the external circuit to the cathode reduce the oxidant flowing into this chamber of the device. The electrolyte, which physically separates the anode and cathode and thus the two gas streams from each other, serves to conduct ions from one electrode to the other to complete the circuit. In a typical SOFC for example, reduced oxygen ions flow from the cathode through the electrolyte to the anode, where they combine with the hydrogen to form water, which exits the fuel cell as exhaust vapor. In general, practical fuel cells are not operated as single units, but are connected in series, like batteries, to build voltage. A serial array of cells is referred to as a stack in which the anode of one cell is connected to the cathode of the next cell by means of an cassette component. This forms a repeatable unit of cassette, anode, electrolyte, and cathode.

To generate a sufficient rate of ion transport across the solid-state electrolyte, typically yttria-stabilized zirconia (YSZ), the SOFC must be operated at high temperature. Until recently, the nominal operating temperature of most SOFC designs was 1000°C. While the high operating temperature has some advantages, namely it allows internal fuel reformation, promotes rapid electrochemical reaction kinetics without resorting to precious metal catalysts, and produces high quality byproduct heat for cogeneration, it also places stringent requirements on the materials used in the SOFC. In fact, the development of suitable low cost materials and the low cost fabrication techniques have historically been and are presently the key technical challenges facing future SOFC development. The materials used in the cell components are limited by their stability in oxidizing and reducing environments, their thermomechanical compatibility, their long-term electrical conductivity, and their chemical compatibility and phase stability while in contact with neighboring dissimilar materials.

Thus far, the only SOFC configuration that has proven durable beyond a few thousand hours of operation is the Siemens-Westinghouse seal-less, tubular design described in S. E. Veyo and C. A. Forbes in "Proceedings of the 3rd European Solid Oxide Fuel Cell Forum," P. Stevens, ed., Switzerland: European Fuel Cell Forum, 1998, p. 79, and N. F. Bessette and J. F. Pierre in "Abstracts of the 2000 Fuel Cell Seminar," J. B. O'Sullivan, Chairman, 2000, p. 519, and which utilizes ceramic cassettes and operates at approximately 1000°C. Though reliable, this design has thus far proven too expensive to be competitive with traditional means of stationary power generation and displays inadequate power density and poor thermal cycling performance for consideration in mobile applications. However, the recent development of thin, anode-supported YSZ electrolyte cells and the emergence of new electrolyte materials, such as lanthanum gallate, which exhibit higher ionic conductivities at lower temperatures than YSZ, offers the opportunity to consider new SOFC concepts which allow lower temperature operation (Toper ≤ 800°C) while still achieving the same current densities attained in the higher temperature cells.

These and other advances in SOFCs have been driven by significant levels of government and privately funded research devoted towards the development of these SOFCs. While performing this research, scientists have traditionally utilized custom machined metallic cassettes to hold the electrolyte materials and to direct hydrogen and oxygen to the opposite sides of the electrolyte materials. These machined cassettes are typically formed of four pieces of flat metal, first machined to form the appropriate passageways for gas flow, and then bonded together by sintering. PEN cells are then attached to the resulting cassette, typically with a resistive materials such as a glass. Unfortunately, several disadvantages flow from the use of these machined cassettes and the resulting SOFC stacks formed therewith. One key disadvantage is created by the tendency of the glasses used to form the bond between the cassette and the PEN cell to shrink during the formation of the bond. To create an electrical contact between successive PEN cells in the stack, the amount of shrinkage must be accurately estimated, and the cassettes must be precisely machined to account for this shrinkage. If the tolerance is too large, successive PEN cells will not form an electrically conductive path. If the tolerance is too small, the PEN cells will be compressively loaded under high pressure, potentially breaking the seals necessary to appropriately direct gas flow, or causing electrical shorts across the cassettes themselves. This high level of precision in the machining of the cassettes is both time consuming and expensive. A second disadvantage is derived from the requirement that the cells be heated to a suitable temperature prior to steady-state operation. Machined cassettes typically are formed of thick metals, which in turn present a significant thermal mass which must be heated. An additional disadvantage is presented by the weight of the machined cassettes. Particularly with respect to transportation applications, wherein a SOFC is intended to provide energy for a car or truck, this additional weight generates additional energy requirements to power a vehicle. The use of such machined cassettes is therefore impractical if the cost of these SOFCs is to be lowered to the point where electricity generated by the SOFCs is competitive with existing combustion technologies, or in applications where a quick start up or low weight is desired. Thus, there remains a need for less expensive and low weight cassettes which are suitable for use in SOFCs that can be quickly heated.

The components for the cassettes must perform several functions over the estimated >30,000 hour lifetime of the power generation device: (1) act as a physical barrier between the fuel and oxidant streams to prevent mixing and internal combustion; (2) act as a low resistance conduit for the electrons generated by electrochemical reaction to travel to and from the external load; and (3) provide some measure of structural support for the stack. Until recently, the leading candidate material for the cassettes was doped lanthanum chromite, LaCrO₃, a ceramic which could easily withstand the 1000°C operating temperature of the electrolyte-supported SOFC design. However, difficulties with obtaining high density chromite parts at reasonable sintering temperatures; the tendency of the chromite cassette to partially reduce at the fuel gas/cassette interface, causing the component to warp and the peripheral seal to break due to the chemically induced strain gradients through the thickness of the part; and the recent trend in developing lower temperature, more cost-effective cells which utilize anode-supported, micron-thin electrolytes have caused lanthanum chromite to be supplanted as the cassette material of choice.

More specifically, the lower operating temperatures have created a need for oxidation-resistant alloys as cassette material candidates. The cost of the asmanufactured cassette component will be one of the primary factors in determining the commercial success of any SOFC system. The SOFC stack and balance of plant must be competitive on a dollar per kilowatt-hour basis with other sources of electrical power, or have such an overwhelming advantage in some other performance attribute that the customer is willing to pay a higher price.

EP-A-1401040 discloses a solid oxide fuel cell module for a fuel cell stack. The module comprises four sheet metal parts stamped from plate stock which do not require any forming operations such as folding or dishing. Each part has a different thickness to suit its function.

### Brief Summary Of The Invention

Accordingly, it is an object of the present invention to provide a low cost cassette for use in a SOFC that is amenable to mass production techniques. It is a further object of the present invention to provide a method for manufacturing a low cost cassette for use in SOFC stacks that eliminates the need for time consuming and expensive custom machining. It is yet a further object of the present invention to provide a method for manufacturing a low cost cassette for use in SOFC stacks that takes advantage of low cost, high throughput stamping, forging or coining techniques commonly used for mass producing metal parts. It is yet a further object of the present invention to form cassettes using a minimum number of parts, which, when stacked one on top of the other, provides a pathway for two separate gas streams, directing them past the anode and cathode side(s) (respectively) of PEN cells sealed within the cassettes.

According to the present invention there are provided methods of fabricating a cassette for a SOFC stack as set forth in claims 1 to 7 hereinafter. Furthermore, the present invention provides methods of fabricating SOFC stacks as set forth in claims 8 to 12 and solid oxide fuel cells and cassettes and stacks therefore as set forth in claims 13 to 23. The present invention derives significant economic benefits when compared to prior art methods of forming cassettes because of the present invention avoids the expense of machining these metal parts. Any particular method of forming the separator plate and frame, whether it is stamping, forging, coining, or any other equivalent method, will achieve the benefits of the present invention provided that the method allows the formation of these parts without the requirement that they be machined. Accordingly, as used herein, the term "stamping" should be interpreted and understood to include coining, forging, and any other equivalent techniques, that allow the production of metal parts having complex shapes in three dimensions, with acceptable tolerances for the formation of gas tight seals when the parts are stacked together in an SOFC stack, and without the requirement that the parts be machined to acquire the correct shape and/or tolerances.

The frames are configured with a hole in the center of each frame, the internal dimensions of which are designed to be slightly smaller than the outside dimensions of a PEN cell. The outer edge of the PEN cell is then attached with a gas tight seal, thereby "filling" the hole in the center of the frame with the PEN cell. The frames are further configured with two sets of holes (hereinafter termed "manifolds"), typically located in between the outer edge of the frame and the center hole. Manifolds are not filled. Manifolds are used to allow the flow of gasses, such as oxygen and hydrogen, up through one side of successively stacked frames, across the surface of the PEN cell, and then out the other side of the successively stacked frames, thereby facilitating the operation of the PEN cell in the production of electricity. Since a typical SOFC operates by passing hydrogen across the surface of a series of PEN cells while simultaneously passing oxygen across the opposite surface of the series of PEN cells, one set of manifolds is herein termed "oxygen manifolds" and the other set of manifolds is termed "hydrogen manifolds." While a single inlet and a single outlet manifold for each gas may be used, in practice, it is preferred that several inlets and several outlets for each gas be provided. to assist in providing an even distribution of gas across the face of the PEN cell(s). Further, while not required, it is preferred that the outlet manifolds be larger than the inlet manifolds, to assist in creating a pressure drop across the face of the PEN cell(s) and to create a uniform flow distribution though a stack of cassettes. To create a uniform flow distribution through a stack of cassettes, it is preferred that the outlet manifold be π/2 +/-10% the size of the inlet manifold. Finally, it should be noted that while the present invention was conceived and reduced to practice to provide an inexpensive method for forming an SOFC stack, the present invention is generally applicable to any similar problem, wherein it is desired to pass two separate gasses across opposite surfaces of a series of objects. Accordingly, while the present invention is described in the context of a SOFC, the invention should not be limited to this specific application, and is generally applicable to any such similar problem wherein two separate gas streams are to be directed across the opposite sides of a series of plates.

Operating in concert with the frames are a set of separator plates. The separator plates are configured with manifolds that generally align with the manifolds of the frames when the two are stacked on top of one and another. The flow holes of the separator plate are thus configured to work in concert with the flow holes of the frame in a manner that directs two separate gas flows, one across the anode surfaces of a series of PEN cells, and the other across the cathode surfaces of a series of PEN cells, when a series of separator plates, PEN cells, and frames are attached together in a stack.

While it is generally more convenient to attach the PEN cell to the frame prior to attaching the frame to the separator plate, the present invention should be understood as encompassing the foregoing steps regardless of the order in which they are performed. The PEN cell, frame and separator plate are attached to one and another, and successive cassettes are attached to one and another, with a combination of conducting and non-conducting seals. Conducting seals utilize methods including, but not limited to welding and brazing. Non -conducting seals may be formed by methods including, but not limited to, using glass sealing materials or non-conducting gaskets. Non-conducting gaskets include, but are not limited to, ceramics, such as alumina. Non-conducting gaskets may be attached with hermetic seals using glass or braze materials.

When operated, current formed in the PEN cells flows through the adjacent separator plates, such that a stack of cassettes acts like a stack of batteries operating in series. Since the frames are in contact with the separator plates, at least one non-conducting seal must be present to prevent the formation of a short circuit Preferably, the non-conducting seal is formed at the interface between the frame of one cassette, and the separator plate of a successive cassette.

Separator plates and the frames are thus fabricated in a manner such that when a series of separator plates and framers having PEN cells are stacked together, (thereby forming a stack alternating between the two; separator plate/frame/separator plate/frame etc...), two separate pathways for gaseous flow are formed.

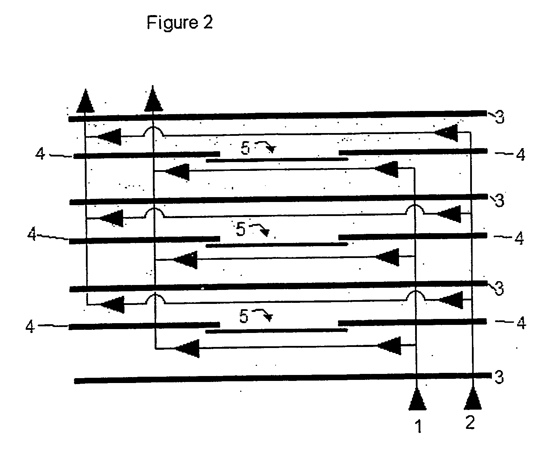

Figure 2, illustrates a cut away side view of a series of separator plates, PEN cells and frames stacked one on top of another. The two separate gas pathways that are to be created are labeled 1 and 2 respectively. The separator plates 3 are interspersed between the frames 4, with each frame attached to a PEN cell 5 set inside a frame 4. While Figure 1 shows a slight gap between the frames 4 and PEN cells 5 for illustrative purposes, in practice, a gas tight seal is formed between the two to prevent any mixing of the gasses. The gas pathways 1, 2 shown in Figure 1 represent a "Co-flow" design, meaning simply that the gasses are made to flow in the same direction across the PEN cells. It should be noted that the present invention also contemplates "Cross-flow" designs, wherein the gasses are made to flow at some angle (typically 90 degrees) relative to one and another, and "Counter-flow" designs, wherein the gasses are made to flow in opposite directions. Whichever design is selected, the challenge is the same; to stamp the separator plate and the frame in such a way that the separator plate and frame can be sealed to one and another, and two separate gas pathways are formed.

An understanding of the challenge of designing acceptable stamps for the separator plate and the frame is gained when one considers that for the simplest stamping operations, the geometry of the upper surface of each of these parts is going to be the mirror image of the surface of the lower surface of the part. Thus, by way of example and not meant to be limiting, if the separator plate is designed to be flat, the frame must be designed so that the oxygen manifolds are formed in a way that they form a gas tight seal against the surface of the separator plate on one side, but not the other, and also form a gas tight seal for the hydrogen manifolds against another separator plate on the opposite side. Methods and techniques to overcome such challenges are described in the Detailed Description of the Invention which follows.

### Brief Description Of The Several Views Of The Drawing

FIG. 1 is a schematic drawing of a planar solid oxide fuel cell (SOFC) stack design which illustrates the general operating principles of an SOFC stack.
FIG. 2 is a cut away side view of a series of separator plates, PEN cells and frames stacked one on top of another, showing one possible flow path for gasses.
FIG. 3 is a perspective view of the separator plate in a preferred embodiment of the present invention.
FIG. 4 is a perspective view of the frame in a preferred embodiment of the present invention.
FIG 5 is a detailed view of support bumps which are formed into the separator plate or the frame, in accordance with the invention.

### Detailed Description Of The Invention

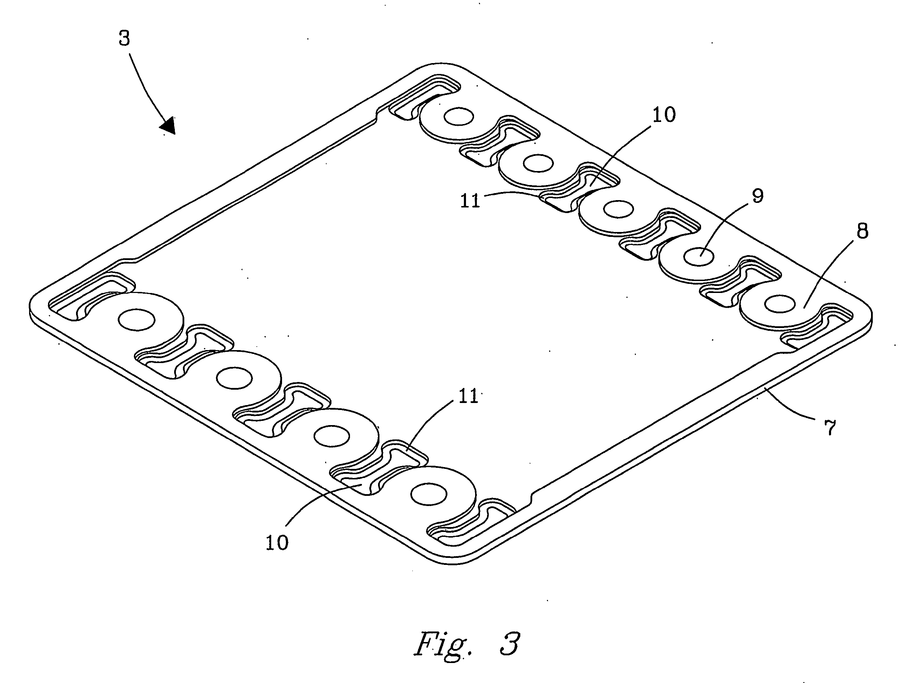

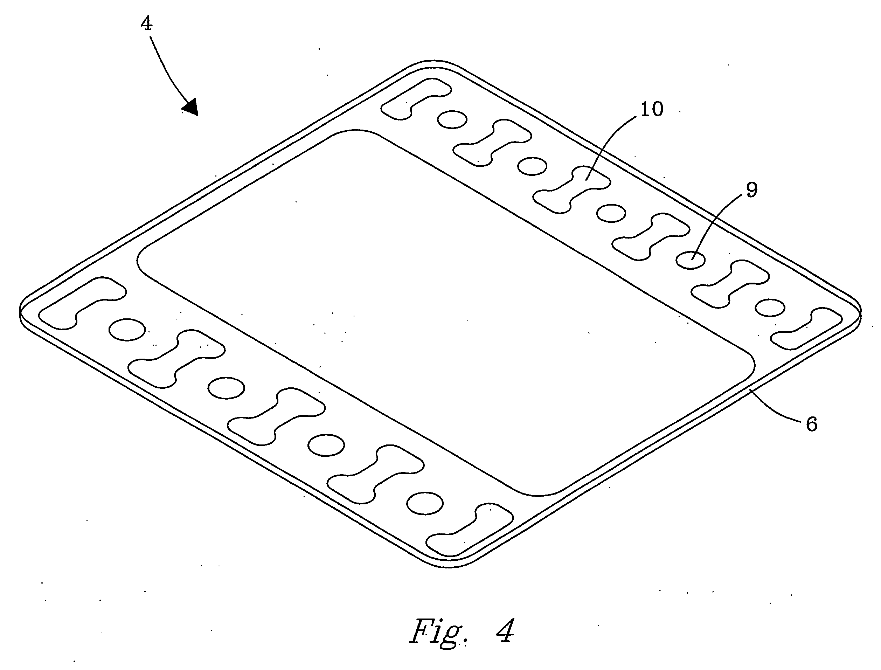

One acceptable design is shown if Figures 3 and 4, showing the separator plate **3** and the frame **4** respectively. When separator plate **3** is attached to frame **4** from below, a raised portion, which is displaced upwardly from the surface of the separator plate 3 during the stamping process, and is herein termed the oxygen manifold collar **8** of the separator plate **3**, completely surrounds oxygen manifolds **9**, and also forms the topmost surface of separator plate **3**. (As used herein, "upward" "downward" "raised" "lowered" and other such terms are described assuming the separator plate **3** and frame **4** are oriented as shown in Figures 3 and 4. The use of such terms should not be construed as limiting the invention, as the particular orientation of the part can obviously be altered without departing from the teaching of the present description.) In this manner, when separator plate **3** is attached to frame **4** from below, oxygen manifold collar **8** of separator plate **3** forms a gas-tight seal with frame **4**. Oxygen manifolds **9** are thereby prevented from allowing gas passing through the oxygen manifolds to enter this region between separator plate **3** and frame **4**. Conversely, the region **11** of separator plate 3 immediately adjacent to the edge of hydrogen manifolds **9** (hereinafter termed the hydrogen manifold collars) are displaced in a downward direction during the stamping process, thereby forming a pathway for gasses passing through the hydrogen manifolds to enter this gap between the separator plate **3** and the frame **4**, and to traverse the surface of a PEN cell (shown in Figure 2) affixed to frame **4** facing separator plate **3** attached to the bottom of frame **4**.

Frame **4** is generally flat, except that the upper edge **6** is displaced to curve in a generally upward direction, such that upper edge **6** is able to form a gas tight seal with the lower edge **7** of separator plate **3** (which are displaced to curve in a downward direction during the stamping process) when separator plate **3** is attached from above frame **4**. When separator plate **3** is attached from above frame **4**, hydrogen manifold collars **11** (which are displaced in a downward direction during the stamping process) also form a gas tight seal between hydrogen manifold collars **11** and the flat surface of frame **4**. The combination of the seal formed by upper edge **6** and lower edge **7**, and hydrogen manifold collars **11** and the flat surface of frame 4, prevents gasses passing through the hydrogen manifolds to enter this region between separator plate **3** and frame **4**. Conversely, the oxygen manifold collars **8** of the separator plate 3, which are displaced in an upward direction during the stamping process, thereby form a gap between the oxygen manifolds **9** of the separator plate **3** and the corresponding oxygen manifolds **9** of frame **4** when separator plate **3** is attached from above frame **4**. This gap forms a pathway for gasses passing through the oxygen manifolds to enter between the separator plate **3** and the frame **4**, and to traverse the surface of a PEN cell (shown in Figure 2) affixed to frame **4** facing separator plate **3** attached to the top of frame **4**.

The example shown and described in Figures 3 and 4 can be operated as either a co-flow, cross-flow, or counter-flow design, simply by selecting which of the hydrogen and oxygen manifolds **9**, **10** are used to introduce gasses into the stack. While the hydrogen and oxygen manifolds **9**, **10** shown in Figures 3 and 4 are positioned opposite one and another across the surface of the PEN cells, any placement of similar manifolds around the periphery of the PEN cell is possible, and the present invention should in no way be viewed as limited to the specific example selected for illustrative purposes and disclosed in Figures 3 and 4.

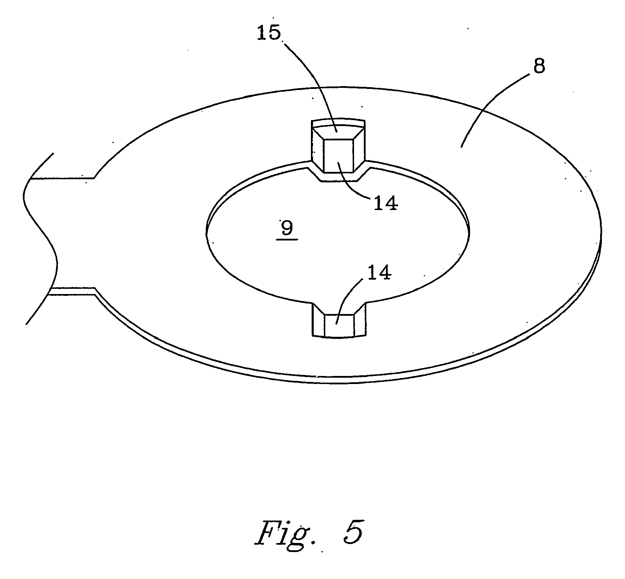

Further enhancements to the present invention have been devised by the inventor's activities in the course of reducing the present invention to practice. While not meant to be limiting, the present invention has been reduced to practice using 400 series stainless steel sheets having a thickness of about 0.5 mm to fabricate the frame **4** and separator plate **3.** Using these materials, for example, it has been discovered that while the hydrogen manifold collars **10** provide some structure upon which the frame **4** can be sealed, the flexibility of these metals can create problems during sealing. To enhance the structural support, as shown in Figure. 5 a portion of the oxygen manifold collar **8** is displaced in a downward direction, to form what are hereby termed "support bumps" **14**. Provided that a continuous section of the oxygen manifold collar **8** still surrounds each of the oxygen manifolds **9**, thereby insuring a continuous gas-tight seal between oxygen manifold collar **8** of separator plate **3** with frame **4** when separator plate **3** is attached to frame **4** from below, vertical cuts **15** may be made in support bumps **14**, thereby providing a gas pathway in a horizontal.

A separate problem occurs, also as a result of the flexibility of the metals typically used to form the frame and separator plate, in the operation of SOFC stacks formed by the method of the present invention. As will be apparent to those having skill in the art, during operation, the PEN cells stacked on top of one and another generate electrical power. When contained within the cassettes of the present invention, each side of each PEN cell needs to be in electrical contact with the separator plate to link the current generated by each PEN cell in series. The inventors have discovered that the flexibility of the materials used to form the separator plate can make it difficult to maintain this electrical contact. A solution to this problem is to provide current collectors made from a flexible, electrically conducting material. One preferred example of a flexible electrically conducting material is a screen. Because of the different chemical environments formed on the oxygen side of the PEN cell and the hydrogen side of the PEN cell, it is preferred that the screen provided on the cathode, or oxidizing side of said separator plate is fabricated from 400 series stainless steel and the screen provided on the anode, or reducing side of said separator plate is fabricated from nickel.

### CLOSURE

While a preferred embodiment of the present invention has been shown and described, it will be apparent to those skilled in the art that many changes and modifications may be made without departing from me scope of the claimed invention For example, while the Detailed Description of the Invention described an embodiment wherein dislocations for both the oxygen manifolds and the hydrogen manifolds were fabricated on the separator plate, those having skill in the art, armed with the disclosure contained herein, will readily be able to design equivalent cassettes wherein some or all of the dislocations are fabricated on the frame.

## Claims

1. A method of fabricating a cassette for a solid oxide fuel cell stack comprising the steps of:
a. stamping a separator plate (3),
b. stamping a frame (4),
c. attaching a PEN cell to said frame, and
d. attaching said frame to said separator plate,
**characterised in that** the method comprises forming support bumps (14) in the separator plate or the frame.

2. The method of claim 1 wherein said separator plate and said frame arc formed of 400 series stainless steel.

3. The method of claim 1 further comprising providing current collectors in communication with each side of said separator plate.

4. The method of claim 3 wherein said current collectors are provided as a flexible electrically conducting material.

5. The method of claim 4 wherein said flexible electrically conducting material is a screen.

6. The method of claim 5 wherein the screen provided on the cathode, or oxidizing side of said separator plate is fabricated from 400 series stainless steel.

7. The method of claim 5 wherein the screen provided on the anode, or reducing side of said separator plate is fabricated from nickel.

8. A method of fabricating a solid oxide fuel cell stack comprising the steps of:
a. fabricating a plurality of cassettes formed by the method of claim 1,
b. stacking said plurality of cassettes on top of one and another so that the anode side of each cassette is in electrical communication with the cathode side of each adjacent cassette, and
c. forming an electrically insulating gas tight seal between the frame of each cassette and the separator plate of each adjacent cassette.

9. The method of claim 8 wherein the electrically insulating gas tight seal is selected from the group consisting of a glass and an insulating gasket.

10. The method of claim 9 wherein the insulating gasket is alumina.

11. The method of claim 10 wherein the insulating gasket is hermetically bonded using a braze.

12. The method of claim 10 wherein the insulating gasket is hermetically bonded using glass.

13. A cassette for a solid oxide fuel cell obtainable according to the fabrication method of any of claims 1 to 7.

14. A solid oxide fuel cell formed of a plurality of cassettes, each cassette comprising:
a. a stamped separator plate (3),
b. a stamped frame (4),
c. a PEN cell attached to said frame, wherein the frame of each cassette is attached to the separator plate of each successive cassette in a gas tight, non-conducting seal that maintains electrical isolation between the anode side and the cathode side of each PEN cell,
**characterised in that** one or more separator plates or frames is formed with support bumps (14).

15. The solid oxide fuel cell of claim 14 wherein the electrically insulating gas tight seal is selected from the group consisting of a glass and an insulating gasket.

16. The solid oxide fuel cell of claim 15 wherein the insulating gasket is alumina.

17. The solid oxide fuel cell of claim 14 wherein said separator plate and said frame are formed of 400 series stainless steel.

18. The solid oxide fuel cell of claim 14 further comprising current collectors maintaining electrical connection between each side of each PEN cell and each adjacent separator plate.

19. The solid oxide fuel cell of claim 18 wherein said current collectors are a flexible electrically conducting material.

20. The solid oxide fuel cell of claim 19 wherein said flexible electrically conducting material is a screen.

21. The solid oxide fuel cell of claim 20 wherein the screen on the cathode, or oxidizing side of the PEN cells is fabricated from 400 series stainless steel.

22. The solid oxide fuel cell of claim 20 wherein the screen provided on the anode, or reducing side of the PEN cells is fabricated from nickel.

## Patentansprüche

1. Ein Verfahren zum Herstellen einer Kassette für einen Festoxid-Brennstoffzellenstapel, das die Schritte umfasst:
a. Stanzen einer Trennplatte (3),
b. Stanzen eines Rahmens (4),
c. Befestigen einer PEN-Zelle am Rahmen und
d. Befestigen des Rahmens an der Trennplatte,
**dadurch gekennzeichnet, dass** das Verfahren aufweist: Ausbilden von Unterstützungserhebungen (14) in der Trennplatte oder dem Rahmen.

2. Das Verfahren gemäß Patentanspruch 1, wobei die Trennplatte und der Rahmen aus Edelstahl der 400er Serie gebildet sind.

3. Das Verfahren gemäß Patentanspruch 1, das weiterhin umfasst: Bereitstellen von Stromkollektoren, die in Verbindung mit jeder Seite der Trennplatte stehen.

4. Das Verfahren gemäß Patentanspruch 3, wobei die Stromkollektoren als ein flexibles elektrisch leitfähiges Material bereitgestellt sind.

5. Das Verfahren gemäß Patentanspruch 4, wobei das flexible elektrisch leitfähige Material ein Schirm ist.

6. Das Verfahren gemäß Patentanspruch 5, wobei der Schirm, der auf der Kathode oder Oxidationsseite der Trennplatte bereitgestellt ist, aus dem Edelstahl der 400er Serie hergestellt ist.

7. Das Verfahren gemäß Patentanspruch 5, wobei der Schirm, der auf der Anode oder Reduktionsseite der Trennplatte bereitgestellt ist, aus Nickel hergestellt ist.

8. Ein Verfahren zum Herstellen eines Festoxid-Brennstoffzellenstapels, das die Schritte umfasst:
a. Herstellen einer Mehrzahl von Kassetten, die durch das Verfahren gemäß Patentanspruch 1 gebildet sind,
b. Stapeln der Mehrzahl von Kassetten aufeinander, sodass die Anodenseite jeder Kassette in elektrischer Verbindung mit der Kathodenseite jeder benachbarten Kassette steht, und
c. Ausbilden einer elektrisch isolierenden gasdichten Dichtung zwischen dem Rahmen jeder Kassette und der Trennplatte jeder benachbarten Kassette.

9. Das Verfahren gemäß Patentanspruch 8, wobei die elektrisch isolierende gasdichte Dichtung ausgewählt ist aus der Gruppe bestehend aus einem Glas und einer Isolierdichtung.

10. Das Verfahren gemäß Patentanspruch 9, wobei die Isolierdichtung Aluminiumoxid ist.

11. Das Verfahren gemäß Patentanspruch 10, wobei die Isolierdichtung unter Verwendung einer Hartlötung hermetisch gebunden ist.

12. Das Verfahren gemäß Patentanspruch 10, wobei die Isolierdichtung unter Verwendung von Glas hermetisch gebunden ist.

13. Eine Kassette für eine Festoxid-Brennstoffzelle, die gemäß des Herstellungsverfahrens gemäß einem der Patentansprüche 1 bis 7 erhältlich ist.

14. Eine Festoxid-Brennstoffzelle, die aus einer Mehrzahl von Kassetten gebildet ist, wobei jede Kassette aufweist:
a. eine gestanzte Trennplatte (3),
b. einen gestanzten Rahmen (4),
c. eine PEN-Zelle, die an dem Rahmen angebracht ist, wobei der Rahmen jeder Kassette an der Trennplatte jeder nachfolgenden Kassette in einer gasdichten, nichtleitenden Dichtung befestigt ist, die eine elektrische Isolierung zwischen der Anodenseite und der Kathodenseite jeder PEN-Zelle aufrechterhält,
**dadurch gekennzeichnet, dass** eine oder mehrere Trennplatten oder Rahmen mit Unterstützungserhebungen (14) ausgebildet sind.

15. Die Festoxid-Brennstoffzelle gemäß Patentanspruch 14, wobei die elektrisch isolierende gasdichte Dichtung ausgewählt ist aus der Gruppe bestehend aus einem Glas und einer Isolierdichtung.

16. Die Festoxid-Brennstoffzelle gemäß Patentanspruch 15, wobei die Isolierdichtung Aluminiumoxid ist.

17. Die Festoxid-Brennstoffzelle gemäß Patentanspruch 14, wobei die Trennplatte und der Rahmen aus einem Edelstahl der 400er Serie gebildet sind.

18. Die Festoxid-Brennstoffzelle gemäß Patentanspruch 14, die weiterhin Stromkollektoren aufweist, die eine elektrische Verbindung zwischen jeder Seite jeder PEN-Zelle und jeder benachbarten Trennplatte aufrechterhalten.

19. Die Festoxid-Brennstoffzelle gemäß Patentanspruch 18, wobei die Stromkollektoren ein flexibles elektrisch leitfähiges Material sind.

20. Die Festoxid-Brennstoffzelle gemäß Patentanspruch 19, wobei das flexible elektrisch leitfähige Material ein Schirm ist.

21. Die Festoxid-Brennstoffzelle gemäß Patentanspruch 20, wobei der Schirm auf der Kathode oder Oxidationsseite der PEN-Zellen aus Edelstahl der 400er Serie hergestellt ist.

22. Die Festoxid-Brennstoffzelle gemäß Patentanspruch 20, wobei der Schirm, der auf der Anode oder Reduktionsseite der PEN-Zellen bereitgestellt ist, aus Nickel hergestellt ist.

## Revendications

1. Procédé de fabrication d'une cassette pour un empilement de piles à combustible à oxyde solide comprenant les étapes de :
a. emboutissage d'une plaque séparatrice (3),
b. emboutissage d'un cadre (4),
c. fixation d'une cellule PEN sur ledit cadre, et
d. fixation dudit cadre sur ladite plaque séparatrice,
**caractérisé en ce que** le procédé comprend la formation de bosses de support (14) dans la plaque séparatrice ou le cadre.

2. Procédé selon la revendication 1 dans lequel ladite plaque séparatrice et ledit cadre sont constitués d'acier inoxydable série 400.

3. Procédé selon la revendication 1 comprenant en outre la pose de collecteurs de courant en communication avec chaque côté de ladite plaque séparatrice.

4. Procédé selon la revendication 3 dans lequel lesdits collecteurs de courant sont constitués d'un matériau conducteur flexible.

5. Procédé selon la revendication 4 dans lequel ledit matériau conducteur flexible est un écran.

6. Procédé selon la revendication 5 dans lequel l'écran posé sur la cathode ou côté oxydant de ladite plaque séparatrice est constitué d'acier inoxydable série 400.

7. Procédé selon la revendication 5 dans lequel l'écran posé sur l'anode ou côté réducteur de ladite plaque séparatrice est constitué de nickel.

8. Procédé de fabrication d'un empilement de piles à combustible à oxyde solide comprenant les étapes de :
a. fabrication d'une pluralité de cassettes fabriquées par le procédé selon la revendication 1,
b. empilement de ladite pluralité de cassettes les unes sur les autres de manière à ce que le côté anode de chaque cassette soit en communication électrique avec le côté cathode de chaque cassette adjacente, et
c. formation d'un joint isolant électrique étanche aux gaz entre le cadre de chaque cassette et la plaque séparatrice de chaque cassette adjacente.

9. Procédé selon la revendication 8 dans lequel le joint isolant électrique étanche aux gaz est choisi dans le groupe constitué d'un verre et d'un joint d'étanchéité isolant.

10. Procédé selon la revendication 9 dans lequel le joint d'étanchéité isolant est de l'alumine.

11. Procédé selon la revendication 10 dans lequel le joint d'étanchéité isolant est relié hermétiquement à l'aide d'une brasure.

12. Procédé selon la revendication 10 dans lequel le joint d'étanchéité isolant est relié hermétiquement à l'aide de verre.

13. Cassette pour une pile à combustible à oxyde solide pouvant être obtenue grâce au procédé de fabrication selon l'une quelconque des revendications 1 à 7.

14. Pile à combustible à oxyde solide constituée d'une pluralité de cassettes, chaque cassette comprenant :
a. une plaque séparatrice emboutie (3),
b. un cadre embouti (4),
c. une cellule PEN fixée sur ledit cadre, le cadre de chaque cassette étant fixé sur la plaque séparatrice de chaque cassette successive dans un joint non conducteur étanche aux gaz qui maintient une isolation électrique entre le côté anode et le côté cathode de chaque cellule PEN,
**caractérisée en ce qu'**une ou plusieurs plaques séparatrices ou qu'un ou plusieurs cadres comportent des bosses de support (14).

15. Pile à combustible à oxyde solide selon la revendication 14 dans laquelle le joint isolant électrique étanche aux gaz est choisi dans le groupe constitué d'un verre et d'un joint d'étanchéité isolant.

16. Pile à combustible à oxyde solide selon la revendication 15 dans laquelle le joint d'étanchéité isolant est de l'alumine.

17. Pile à combustible à oxyde solide selon la revendication 14 dans laquelle ladite plaque séparatrice et ledit cadre sont constitués d'acier inoxydable série 400.

18. Pile à combustible à oxyde solide selon la revendication 14 comprenant en outre des collecteurs de courant maintenant une connexion électrique entre chaque côté de chaque cellule PEN et de chaque plaque séparatrice adjacente.

19. Pile à combustible à oxyde solide selon la revendication 18 dans laquelle lesdits collecteurs de courant sont constitués d'un matériau conducteur flexible.

20. Pile à combustible à oxyde solide selon la revendication 19 dans laquelle ledit matériau conducteur flexible est un écran.

21. Pile à combustible à oxyde solide selon la revendication 20 dans laquelle l'écran sur la cathode ou côté oxydant des cellules PEN est constitué d'acier inoxydable série 400.

22. Pile à combustible à oxyde solide selon la revendication 20 dans laquelle l'écran posé sur l'anode ou côté réducteur des cellules PEN est constitué de nickel.
